# NEW EUROPEAN PATENT SPECIFICATION

(11) **EP 0 630 558 B2**
(45) Date of publication and mention of the opposition decision: **03.03.2004**
(45) Mention of the grant of the patent: 10.05.2000
(21) Application number: 94201790.6
(22) Date of filing: 22.06.1994
(51) Int. Cl.: A01J 7/00, A01J 5/04

(54) **A construction for automatically milking animals**
Gerät zum automatischen Melken von Tieren
Dispositif de traite automatique d'animaux

(30) Priority: 24.06.1993 NL 9301098
(43) Date of publication of application: 28.12.1994
(60) Divisional application: 99202957.9
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 277 396
- EP-A- 0 332 232
- EP-B- 0 091 892
- NL-A- 8 602 505
- SU-A- 1 500 217
- SU-A- 1 634 193
- SU-A- 1 667 751
- US-A- 2 532 088
- US-A- 2 952 860
- US-A- 4 034 714
- US-A- 4 305 346
- US-A- 4 376 053
- VDI Heft 9 - Robotereinsatz in der Landwirtschaft am Beispiel des Melkens, pages 111-126;
- Untersuchung zum robotergestützten Melken, D. Schillingmann
- Dairy Herd Management, Efficiency? Try Robots

## Description

The present invention relates to a construction according to the preamble of claim 1.

Such a construction is known from document Robotereinsatz in der Landwirtschaft am Beispiel des Melkens Tagung Brauschweig-Völkenrode 5/6 Dezember 1990 p. 111-126.

It is an object of the invention to improve the quality of the milk.

Therefore, according to the invention, the construction comprises the features as defined in claim 1.

The construction according to the invention has the advantage that both the foremilking and the milking take place in the same milking parlour, which is of course time saving.

Further, the invention is characterized in that the construction comprises an up and downward movable massaging device for massaging an animal's udder. Massaging the udder stimulates the animal to relax the teats, so that, when a teat cup is connected, the milk starts flowing sooner. This enables a gain in time to be obtained for each animal to be milked.

According to another feature of the invention, the massaging device is fitted on a robot arm. According to a further feature of the invention, the robot arm is made up of a first part and a second part, with the foremilking device being fitted on the second part.

According to another feature of the invention, the second part of the robot arm is made up of a parallelogram/link gear, and on a first arm of this parallelogram/link gear there is provided a motor driving an eccentric disposed pivotably in a connecting member, whose other end is pivotably connected with a second arm of the parallelogram/link gear.

According to another feature of the invention, the first part as well as the second part of the robot arm is designed as a parallelogram/link gear. Owing to the fact that the first part of the robot arm is designed as a parallelogram/link gear, the height of the massaging device is adjustable in a simple manner.

According to a further embodiment of the invention, the first part of the robot arm comprises a motor driving an eccentric pivotably disposed in a connecting member, whose other end is pivotably connected with the second part of the robot arm.

In accordance with a feature of the invention, the two exemplary embodiments of the massaging device comprise means, with the help of which a cleaning and/or disinfecting fluid can be supplied to the massaging device. The massaging device as well as the teats and a part of the udder are cleaned by means of this cleaing and/or disinfecting fluid. According to a further feature of the invention, in either case the means comprise a supply line which is connected to the lower side of the massaging device.

According to still another exemplary embodiment of the invention, the construction comprises a single handling implement, by means of which the four teats can be treated successively.

According to another feature of the invention, the handling implement comprises a teat cup. On its upper side, the teat cup is, according to still another feature of the invention, provided with a flexible flange which, during operation, is at least partly in contact with the teat and also with a part of the underside of the udder. According to a feature of the invention, the flexible flange is provided with radially disposed canals, in which there is provided an arrangement for transmission of ultra-short waves to stimulate the blood flow. An appropriate blood circulation in the teats and udder is not only conducive to the health of the udder, but it also stimulates the animal to make the milk production take place faster.

The invention will now be further explained with reference to the accompanying drawings, in which:
Figure 1 is a plan view of a milking parlour not related to the invention comprising two compartments, where a milking robot and a cleaning device are pivotably disposed in between the two compartments;
Figure 2 is a side view of the milking parlour of Figure 1;
Figure 3 is a detailed side view of the cleaning device represented in Figures 1 and 2;
Figure 4 shows the order in which the animals in the compartments of the milking parlour of Figures 1 to 3 are milked and cleaned/massaged, respectively;
Figure 5 is a plan view of an embodiment of the invention, showing a milking parlour made up of compartments with, arranged in between the two compartments, a pivotable sensor and a pivotable cleaning/massaging device;
Figure 6 is a cross-sectional side view of the cleaning/massaging device taken along the line VI-VI in Figure 5, and
Figure 7 is a plan view of the cleaning/massaging device according to Figure 6.

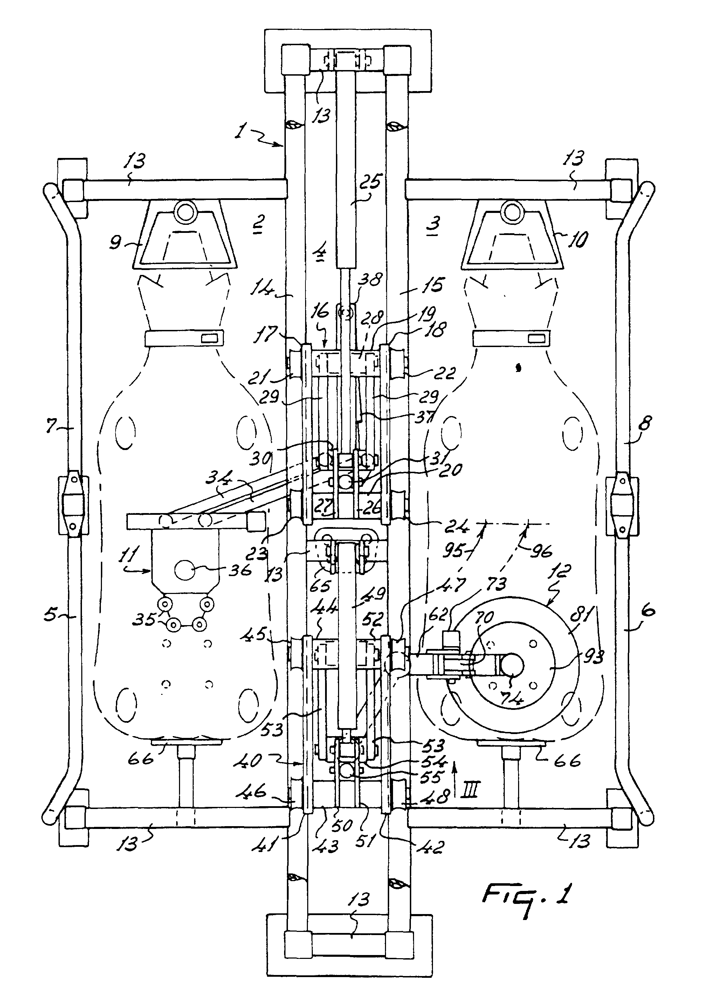

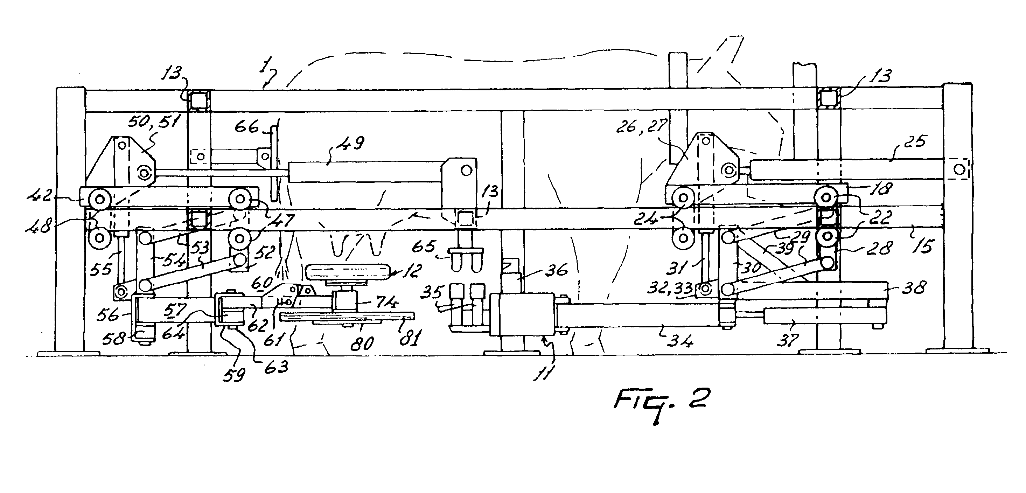

Figure 1 is a plan view of a twin milking parlour 1 comprising two compartments 2 and 3 situated side by side as well as an interspace 4 provided between these two compartments 2 and 3. The animals gain access to the compartments 2 and 3 through doors 5 and 6, respectively, while they are led out of these compartments through doors 7 and 8. In each of the compartments 2 and 3 there is provided an automatic feeding device, the feed troughs 9 and 10 of which are indicated in Figure 1. In a condition of rest, a milking robot 11 and a cleaning/massaging device 12 are in the interspace 4. The milking robot 11 comprises a chassis 16 movable on two rails 14 and 15 which belong to the enclosure 13 of the two compartments 2 and 3. This chassis 16 is composed of transverse beams 19 and 20 interconnected by means of beams 17 and 18, with these transverse beams on either end being provided with pairs of rollers 21 to 24. Through these pairs of rollers, the chassis 16 can be moved longitudinally on the rails 14 and 15 between the two compartments 2 and 3. This movement is effected by means of an actuating cylinder 25 on one side attached to the front part of the enclosure 13, and, on the other side, fastened in between two plates 26 and 27 mounted at a certain mutual distance on the transverse beam 20. On the transverse beams 19 there are provided beams 28 extending downwards. Supporting beams 30 are connected to the beams 28 by means of a parallelogram link gear 29 operating in an essentially vertical plane. The supporting beams 30 can be moved up and down, parallel to the beams 28, by means of an actuating cylinder 31 disposed in between the plates 26 and 27 fastened to the upper transverse beams 20 and plates 32 and 33 fastened to a beam between the supporting beams 30 (Figure 2). On the lower side of the supporting beams 30 there is provided a robot arm construction 34 equipped with teat cups 35 and a sensor 36 to locate, with reference to the end of the robot arm construction 34 where the teat cups 35 are situated, the teats of an animal present in one of the compartments. The end of the robot arm construction 34 provided with the teat cups 35 is movable horizontally in the way as indicated hereinafter, whereas the robot arm construction 34 is movable vertically by means of the actuating cylinder 31. As is indicated in Figure 1, the robot arm construction 34 comprises a parallelogram link gear 29 which is pivotably connected with the supporting beams 30. Pivoting the parallelogram link gear 29 in a horizontal plane is done by means of an actuating cylinder 37 pivotably connected, on one end, to an arm of this parallelogram link gear 29, and on the other end, to a beam 38 mounted horizontally on the supporting beam 30. For strength, a strut 39 is mounted between the beam 38 and the transverse beams 20. Furthermore, one of the arms of the parallelogram link gear 29 comprises an actuating cylinder - although not depicted - which enables the end of the robot arm construction 34 to be rotated. Owing to the movement of the chassis 16 on the rails 14 and 15, the swivelling movement to be made by means of the parallelogram link gear 29 and the possibility to pivot the end of the robot arm construction 34, the teat cups 35 can be put into any position under the udder of an animal present in one of the compartments 2 or 3. The milking robot 11 has been designed such that the chassis 16 is capable of travelling on the front part of the rails 14 and 15, while further the parallelogram link gear 29 is directed rearwards such that the end of the robot arm construction 34 can swivel to a position between a fore leg and a hind leg, and subsequently be put under the udder of the animal, namely in a position being determined by means of the sensor 36, which is preferably a laser sensor.

As mentioned before, there is installed in the interspace 4 not only the milking robot 11, but also the cleaning/massaging device 12. In the depicted embodiment of the invention, the cleaning/massaging device 12 comprises a chassis 40 movable on the rails 14 and 15. This chassis 40 is made up of transverse beams 43 and 44 connected by means of beams 41 and 42, with the two ends of the transverse beams 43 and 44 being provided with roller pairs 45 - 48. The chassis 40 can be moved longitudinally on the rails 14 and 15 between the two compartments 2 and 3 by means of these roller pairs 45 - 48. This movement is effected by means of an actuating cylinder 49, one end of which, approximately in the centre of the interspace 4, is fastened to a transverse beam included in the enclosure 13 and fitted as such between the rails 14 and 15, and the other end of which is fastened through two plates 50 and 51 fitted at a certain distance from each other on the transverse beam 43. At the centre of the lower transverse beam 44 there are provided, in a rigid connection with the transverse beam 44, beams 52 extending downwards. Supporting beams 54 are connected with the lower ends of the beams 52 by means of a parallelogram link gear 53 acting in an essentially vertical plane. The supporting beams 54 can be moved up and down, parallel to the beams 52, by means of an actuating cylinder 55 mounted between plates 50 and 51 fastened to the upper transverse beam 43. Between the supporting beams 54, at their lower end, there is provided a U-section connecting piece 56, on which a robot arm construction 57 is pivotably mounted. The robot arm construction 57 is rotatable about an essentially vertical axis by means of a motor 58 also disposed on this U-shape connecting piece 56. The robot arm construction 57 is made up of a first part 59 which is connected with the U-shape connecting piece 56 and of a second part 60 which is connected with the end of the first part 59 of the robot arm construction by means of a horizontal pivot 61. On the end of the second part 60 of the robot arm construction, the cleaning/massaging device 12 is fitted. The first part 59 of the robot arm construction is also made up of two parts 62 which are pivotable with respect to each other about a vertical shaft 63. The two parts 62 can be pivoted with respect to each other about the vertical shaft by means of a motor mounted near the vertical shaft 63.

Near the centre of the twin milking parlour 1, a spraying plant 65 for rinsing and disinfecting the teat cups 35 is installed on the enclosure 13,

Furthermore, there are provided, close to the rear side of the compartments 2 and 3, positioning plates 66, by means of which the animal can be longitudinally positioned in the compartments 1 and 2.

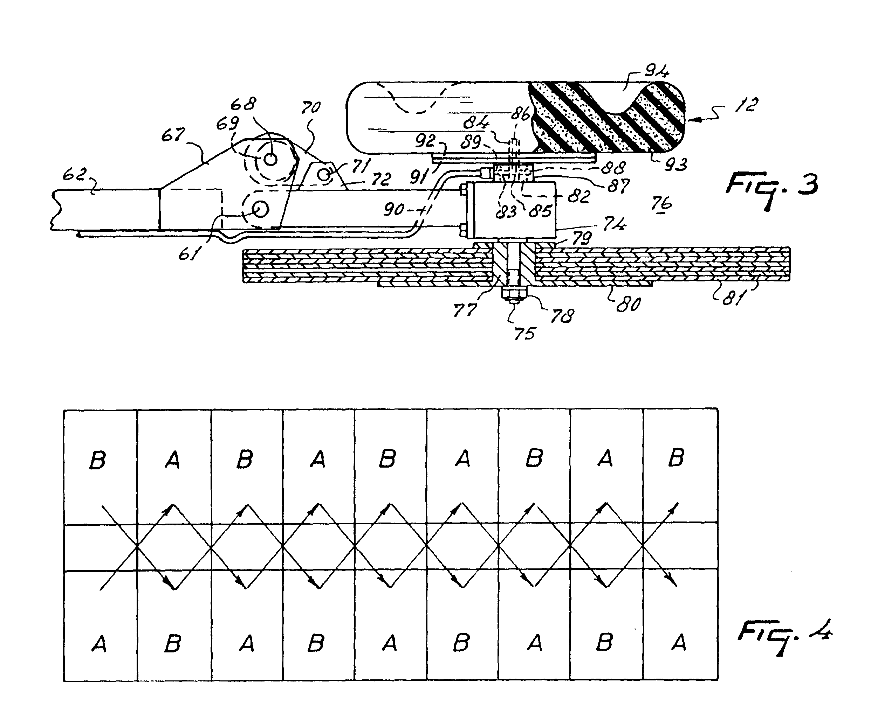

Figure 3 shows enlarged the cleaning/massaging device 12 of Figures 1 and 2. The part 62 belonging to the first part 59 of the robot arm construction 57 comprises, at its end, two lugs 67 bearing the horizontal pivot 61 of the second part 60 of the robot arm construction. Above the horizontal pivot 61, a second horizontal pivot 68, bearing-supported by lugs 67, is provided with an eccentric disc 69. The eccentric disc 69 is bearing-supported by a strip-type connecting member 70, of which one end is pivotably connected with a third horizontal pivot 71 which is connected with the second part 60 of the robot arm construction by means of lugs 72. The second horizontal pivot 68 is driven by a motor 73 which is fitted on the external side of one of the lugs 67. The motor 73 as well as the motors 58 and 64 may be hydraulic, pneumatic or electric ones.

A further drive motor 74, provided with a drive shaft 75 extending vertically, is installed at the end of the second part 60 of the robot arm construction. The drive shaft 75 extends from below the motor 74 to above the motor 74. A cleaning device 76 for cleaning the animal's legs is mounted on the stub of the drive shaft 75 at the lower side of the motor 74. The cleaning device 76 comprises a cylindrical bush 77 pushed over the stub and locked by means of a nut 78 provided on the lower end of the shaft stub. The upper side of the cylindrical bush 77 has a flange 79 of a diameter which roughly corresponds with the diameter of the drive motor 74. The lower side of the cylindrical bush 77 is provided with a flange 80 which has a diameter which is three times that of the first-mentioned flange 79. The flanges 79 and 80 clamp in position a plurality of textile discs 81 radially disposed and stacked. The textile discs 81 have a diameter which is approximately twice that of the lower flange 80. In an alternative embodiment which is not further detailed hereinafter, instead of the textile discs 81, bristles can be radially disposed on the cylindrical bush 77.

On the part of the shaft 75 rising above the motor 73, the cleaning/massaging device 12 is mounted. The shaft stub rising above the motor 73 comprises a first cylindrical part 82 provided with a recess 83 disposed radially in the cylindrical surface and at half the height of this cylindrical part 82. Above the first cylindrical part 82, there is provided a second cylindrical part 84 which has a diameter of about one third that of the first cylindrical part 82. At the height of the recess 83, the first cylindrical part 82 has a horizontal hole 85 which reaches to approximately the centre of the cylindrical part 82 and then connects with a vertical hole 86 provided on the longitudinal axis of the second cylindrical part 84.

Enclosing the first cylindrical part 82 and rigidly mounted on the housing of the drive motor 74 is a cylindrical ring 8.7 which is also provided with a recess 88 which connects with the recess 83 in the first cylindrical part 82. Furthermore, the cylindrical ring 87 is provided with a horizontal hole 89 which opens into the chamber formed by the recesses 83 and 88. Through a nipple, not shown, a supply line 90 for the supply of spraying and/or disinfecting liquid is connected to the horizontal hole 89. Also mounted on the first cylindrical part 82 is a flat concentric mounting disc 91 which is detachably connected with a further disc 92 slid on the second cylindrical part 84 and rigidly connected with a disc 93 made of foam rubber. The foam rubber disc 93 is about 10 cms thick and it has a diameter of about 40 cms. The first cylindrical part 82, which constitutes a spray nozzle, extends about 3 cms into the foam rubber disc 93. The diameter of the mounting disc 91 and the further disc 92 amounts to about half that of the foam rubber disc 93. The upper side of the foam rubber disc 93 is provided with a hollow surface profile 94 disposed concentrically at about two thirds of the radius, as seen from the centre, of the foam rubber disc 93. The hollow profile 94 is about 8 cms wide and about 4 cms deep. It will be obvious that, apart from foam rubber, any other soft flexible material may be utilized.

During operation, the cleaning/massaging device 12 is put under the udder of an animal by means of the robot arm construction 57. Positioning the cleaning/massaging device 12 will take place on account of data obtained through an animal identification system or on account of data gathered through a sensor. After the foam rubber disc 93 has been put under the udder, the motor 73 is put into operation, whereupon the eccentric disc 69 having a 1 mm eccentricity is driven. Through the strip-type connecting member 70, this causes the second part of the robot arm 60 to move up and down. The dimensions of the second part 60 of the robot arm construction have been chosen such that the massaging disc 93 has a stroke of 10 mms near the centre. During massaging and/or cleaning the udder, the further drive motor 74 is also put into operation. This drive motor 74 is preferably a reversible electric motor which runs at about 40 r.p.m. in operating condition. For an even more profound cleaning and/or massaging effect, in operating condition, it is also practicable to put the motors 58 and 64 into operation, so that the foam rubber disc 93 is also moved in a horizontal plane. During cleaning and/or massaging, a spray and/or disinfection liquid can be applied to the foam rubber disc 93 through the supply line 90.

Furthermore, it is feasible to clean the animal's legs by means of the robot arm construction 57 and the textile discs 81. To this end, the further drive motor 74 drives the textile discs 81, while the textile discs 81 are pressed against a leg of the animal and perform a reciprocating movement therealong by means of the robot arm construction 57. During leg cleaning, the motor 73 can also be energized, causing the textile discs 81 to move vibratingly up and down in the cleaning process. Cleaning the animal's legs in the above manner has the advantage that no udder/teat contamination takes place when the animal lies down to rest and, in doing so, a leg touches the udder and/or teats.

While an animal is being cleaned/massaged with the cleaning/massaging device 12 in one of the two compartments, it is possible at the same time to milk, with the milking robot 11, an other animal in the other compartment. After the milking robot 11 has milked the animal to be milked, the teat cups 35 are disconnected and the milking robot 11 is swung to the other compartment in accordance with the arrows 95 shown in Figure 1. The animal milked subsequently leaves the compartment through the door 7, while another animal is allowed to go through the door 5 and to take its place. The cleaning/massaging device 12 is then swung to the animal to be cleaned and/or massaged, in accordance with the arrow 96 shown in Figure 1. After this animal has also been cleaned and milked, the preceding process repeats itself. In Figure 4 it is indicated how the two compartments are occupied in terms of time and which actions take place in the respective compartments. Here, reference letter A denotes milking and reference letter B denotes cleaning and massaging. When it is taken for granted that the compartments are fully occupied for twenty-four hours and that the herd consists of hundred cows to be milked three times a day, about five minutes are available for each milking session.

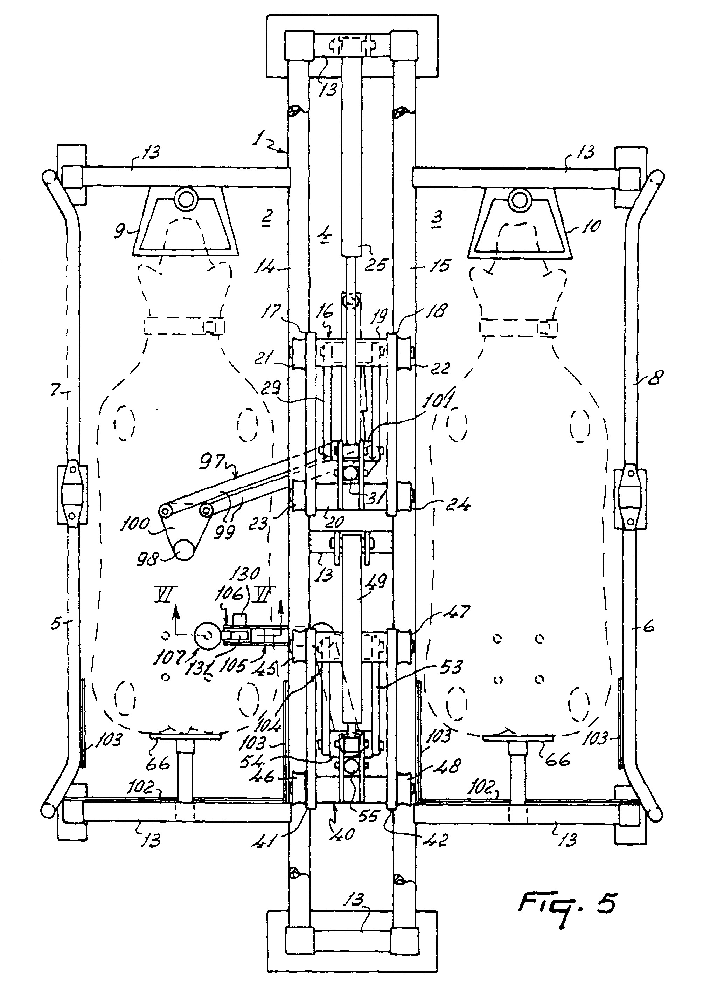

Figure 5 represents an embodiment of a twin milking parlour 1 wherein corresponding parts of Figures 1 and 2 are indicated by the same reference numerals. The twin milking parlour 1 shown in Figure 5 comprises a sensor 98 which can be swivelled with a square link gear 97. The square link gear 97 comprises two arms 99 hinged on one end on a carrying platform 100, on which the sensor 98 is placed. The other ends of the arms 99 are hinged on a beam 101 fitted on a chassis - not shown - which is identical to the chassis 16 of the construction according to Figures 1 and 2. With this chassis it is possible to move the sensor 98 in the longitudinal direction of the twin milking parlour. With an actuating cylinder - not shown - it is also possible to swing the sensor 98 from one compartment to the other. The sensor 98 may be implemented as a laser sensor, an ultrasonic sensor or any other type of sensor.

In operating condition, the co-ordinates of the teats are determined by means of the sensor 98. For this purpose, the sensor is swung underneath the animal to a position before the udder, and the sensor transmits a signal towards the rear side of the compartment. When this signal hits the teats, it is reflected to a receiving element in the sensor 98. From the signal reflected, the positions of the teats can be derived.

Furthermore, the rear walls of the compartments are covered with shielding elements 102 which prevent that elements out of the compartments affect the detection process. The side walls, too, are provided with shielding elements 103 near the rear side of the compartments. Here, the shielding elements 103 abut on the shielding element 102 which is the rear wall. In the exemplary embodiment shown in Figure 5, the shielding elements 103 of the side walls of the compartments screen off about 1/5 of the overall length of a compartment. In addition, the shielding elements 102 as well as the shielding elements 103 are provided with a layer absorbing sensor rays.

In the twin milking parlour of Figure 5, there is also provided a robot arm construction 104 which partly corresponds with the robot arm construction 57 shown in Figures 1 and 2. In the same way as the robot arm construction 57, the robot arm construction 104 is, by means of a chassis, movable in the longitudinal direction of the twin milking parlour.

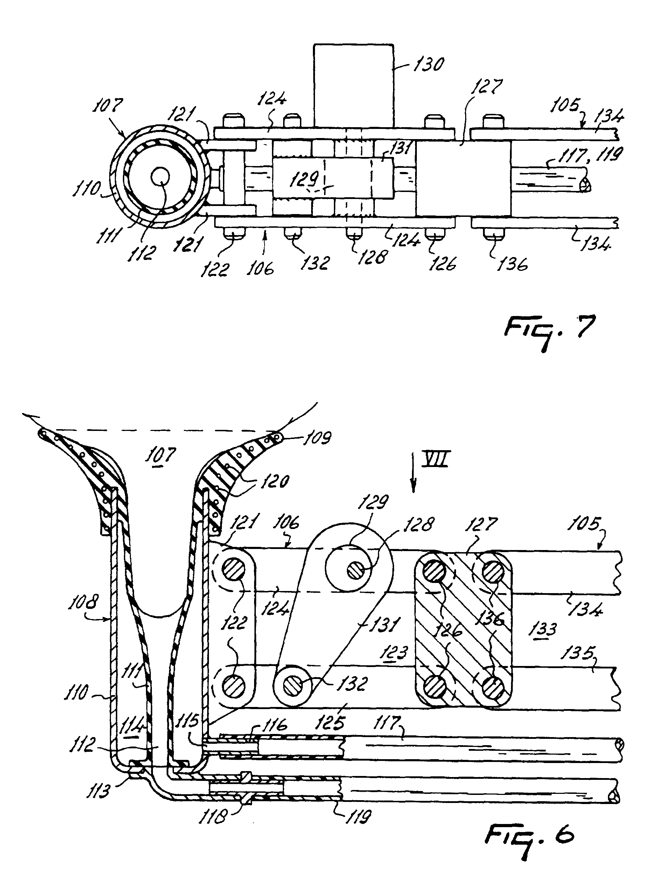

Also the first part 105 of the robot arm construction 104 is identical to the first part 59 of the robot arm construction in Figures 1 and 2. The second part 106 of the robot arm construction 104 is different from the second part 60 of the robot arm construction 57 in Figures 1 and 2, and hereinafter it will be further detailed with reference to Figures 6 and 7.

At the end of the second part 106 of the robot arm construction, there is provided an embodiment of a cleaning/massaging device 107 utilized as a foremilking device. When milk is extracted with the foremillang device 107, it is automatically drained off to a tank - not shown - which, apart from the standard milk tank, is connected to the milk line system. It will be obvious that with the foremilking device 107 it is also possible to milk "normally" teat after teat. In Figure 6 it is shown that this cleaning/massaging device 107 comprises a teat cup 108 which is, on its upper side, provided with a flange 109 made of flexible rubber. The teat cup 108 comprises a cylindrical housing 110 accommodating a teat cup liner 111. Near the upper side of the teat cup 108, the teat cup liner 108 ends in the flexible flange 109, while, at least partly, the flexible flange 109 is firmly clamped round the cylindrical housing by means of an annular flange lip. The teat cup liner 111 projects through a hole 112 provided near the lower side of the cylindrical housing 110. The teat cup liner 111 is fixed in position in the hole 112 by means of a further flange 113. The space between the teat cup liner 111 and the inner wall surface of the cylindrical housing 110 forms a chamber 114, which connects to an air suction and pressure line 117 through a hole 115 provided in the cylindrical housing 110 and through a nipple 116 fitted in this hole. A milk/water line 119 is connected to the lower part of the teat cup liner 111 through a connector 118. By applying water, or a cleaning/disinfection liquid, to the teat cup through this line 119 and by forcing the liquid to flow between a teat and the teat cup liner 111 including the flexible flange, the teat and a part of the udder is cleaned/massaged and, if necessary, disinfected.

The flexible flange 113 is furthermore provided with a plurality of canals 120 disposed radially and accommodating transmitting elements - not shown - for transmission of ultra-short waves. Through these ultra-short waves, the flow of blood in the teat and in at least a part of the udder is stimulated. As shown in Figure 7, in the longitudinal direction of the cylindrical housing 110 there are provided two strips 121 at a certain distance from each other. Pivots 122 provided near the upper end and the lower end of these strips 121 constitute, on one side, the axes of rotation of a parallelogram/link gear 123. The parallelogram/link gear 123 comprises a first pair of arms 124 pivotably connected with the upper pivot 122, and a second pair of arms 125 connected with the lower pivot 122. The other ends of the first and the second pairs of arms 124 and 125 are pivotably connected to a block 127 by means of pivots 126.

A shaft 128 bearing-supported near the centre of the first pair of arms 125 is provided with an eccentric disc 129. The shaft 128 constitutes the drive shaft of an electric motor 130 mounted on one of the arms 124. The (eccentric) disc 129, disposed about 3 mms off the centre of the shaft 128, is bearing-supported in a connecting link 131, whose other end is pivotably connected with a shaft 132 passing through the second pair of arms 125. When the electric motor 130 is energized, the eccentric causes the teat cup 108 to move about 10 mms up and down, which produces a certain massaging/stimulating effect. The block 127 is also connected with a further parallelogram/link gear 133 which also comprises a first pair of arms 134 and a second pair of arms 135. The first and second pair of arms 134 and 135 are pivotably connected to the block 127 by means of shafts 136. The second parallelogram/link gear 133 enables the teat cup 108 to be moved up and down by means of an actuating cylinder - not shown - and consequently, to achieve an adjustment in height.

## Claims

1. A construction for automatically milking animals, such as cows, with a milking parlour (1) and a milking robot (11) with teat cups (35) arranged therein, the construction further comprising a robot arm (34, 104) with a foremilking device (107) which is arranged in said milking parlour (1), which foremilking device (107) comprises a separate teat cup (108) and which foremilking device (107) functions such that milk obtained by means of the foremilking device does not come into contact with the milk obtained for human consumption,
**characterized in that** a cleaning and/or disinfecting fluid is supplied through the same line of the foremilking device as through which milk, particularly foremilk, is drained off during foremilking.

2. A construction according to claim 1, **characterized in that** the foremilking device can be utilised as a massaging device (12, 107); furthermore the massaging device (12, 107) is disposed on the robot arm (34, 104).

3. A construction according to any one of the preceding claims, **characterized in that** the robot arm is made up of a first part (105) and a second part (106), whereby the foremilking device (12, 107) is mounted on the second part (106).

4. A construction according to claim 3, **characterized in that** the second part (106) of the robot arm is constituted by a parallelogram/link gear (123).

5. A construction according to claim 4, **characterized in that** mounted on a first arm (124) of the parallelogram/link gear (123), a motor (130) drives an eccentric (129) which is pivotably fitted in a connecting member (131), whose other end is pivotably connected with a second arm (125) of the parallelogram/link gear (123).

6. A construction according to any one of claims 3 to 5, **characterized in that** the first part (105) as well as the second part (106) of the robot arm (104) is implemented as a parallelogram/link gear.

7. A construction according to claim 3, **characterized in that** mounted on the first part of the robot arm, a motor (73) drives an eccentric disc (129), which is pivotably fitted in a connecting member (70), whose other end is pivotably connected with the second part of the robot arm (34).

8. A construction according to any one of the preceding claims, **characterized in that** the massaging device (107) comprises a teat cup (108).

9. A construction according to any one of the preceding claims, **characterized in that** the massaging device (76) comprises means, with the help of which a cleaning and/or disinfecting fluid can be supplied to the massaging device (12).

10. A construction according to claim 9, **characterized in that** the means comprise a supply fine (90) connected to the lower side of the massaging device.

11. A construction according to any one of the preceding claims, **characterized in that** it comprises a single handling implement, by means of which the four teats can be treated successively.

12. A construction according to claim 11, **characterized in that** the handling implement comprises a teat cup (108).

13. A construction according to claim 12, **characterized in that** on its upper end, the teat cup (108) is provided with a flexible flange (109) which, during operation, is at least partly in contact with the teat and also with a part of the underside of the udder.

14. A construction according to claim 13, **characterized in that** the flexible flange (109) is provided with canals (120) disposed radially.

15. A construction according to claim 14, **characterized in that** the canals (120) comprise an arrangement for transmission of ultra-short waves to stimulate the blood flow.

16. A construction according to any one of the preceding claims, **characterized in that** it comprises a separate foremilking device (107), which functions such that the milk gained by means of the foremilking device does not come into contact with the milk obtained fur human consumption.

## Patentansprüche

1. Vorrichtung zum automatischen Melken von Tieren,.wie z. B. Kühen, mit einem Melkstand (1) und einem Melkroboter (11) mit darin angeordneten Zitzenbechern (35), wobei die Vorrichtung ferner einen Roboterarm (34, 104) mit einer in dem Melkstand (1) angeordneten Vormelkvorrichtung (107) aufweist, wobei die Vormelkvorrichtung (107) einen separaten Zitzenbecher (108) umfaßt, und wobei die Vormelkvorrichtung (107) derart arbeitet, daß mittels der Vormelkvorrichtung gewonnene Milch nicht mit der für den menschlichen Verzehr gewonnenen Milch in Kontakt kommt,
**dadurch gekennzeichnet, daß** eine Reinigungs- und/oder Desinfektionsflüssigkeit durch dieselbe Leitung der Vormelkvorrichtung zugeführt wird, durch die Milch, insbesondere Vorgemelk, während des Vormelkens/Melkens abgeleitet wird.

2. Vorrichtung nach Anspruch 1,
**dadurch gekennzeichnet, daß** die Vormelkvorrichtung als Massagevorrichtung (12, 107) verwendbar und die Massagevorrichtung (12, 107) ferner an dem Roboterarm (34, 104) angeordnet ist.

3. Vorrichtung nach einem der vorhergehenden Ansprüche,
**dadurch gekennzeichnet, daß** der Roboterarm aus einem ersten Teil (105) und einem zweiten Teil (106) zusammengesetzt ist, wobei die Vormelkvorrichtung (12, 107) am zweiten Teil (106) angeordnet ist.

4. Vorrichtung nach Anspruch 3,
**dadurch gekennzeichnet, daß** der zweite Teil (106) des Roboterarmes durch ein Parallelogrammgestänge (123) gebildet ist.

5. Vorrichtung nach Anspruch 4,
**dadurch gekennzeichnet, daß** ein an einem ersten Arm (124) des Parallelogrammgestänges (123) angeordneter Motor (130) einen Exzenter (129) antreibt, der drehbar in einem Verbindungsglied (131) angeordnet ist, dessen anderes Ende mit einem zweiten Arm (125) des Parallelogrammgestänges (123) schwenkbar verbunden ist.

6. Vorrichtung nach einem der Ansprüche 3 bis 5,
**dadurch gekennzeichnet, daß** der erste Teil (105) sowie der zweite Teil (106) des Roboterarmes (104) als Parallelogrammgestänge ausgeführt sind.

7. Vorrichtung nach Anspruch 3,
**dadurch gekennzeichnet, daß** ein am ersten Teil des Roboterarmes angebrachter Motor (73) eine Exzenterscheibe (129) antreibt, die drehbar in einem Verbindungsglied (70) angeordnet ist, dessen anderes Ende mit dem zweiten Teil des Roboterarmes (34) schwenkbar verbunden ist.

8. Vorrichtung nach einem der vorhergehenden Ansprüche, **dadurch gekennzeichnet, daß** die Massagevorrichtung (107) einen Zitzenbecher (108) aufweist.

9. Vorrichtung nach einem der vorhergehenden Ansprüche, **dadurch gekennzeichnet, daß** die Massagevorrichtung (76) Mittel aufweist, mit deren Hilfe der Massagevorrichtung (12) eine Reinigungs- und/oder Desinfektionsflüssigkeit zuführbar ist.

10. Vorrichtung nach Anspruch 9,
**dadurch gekennzeichnet, daß** die Mittel eine Zuführleitung (90) umfassen, die an die Unterseite der Massagevorrichtung angeschlossen ist.

11. Vorrichtung nach einem der vorhergehenden Ansprüche,
**dadurch gekennzeichnet, daß** die Vorrichtung eine Einzelbehandlungsvorrichtung aufweist, mittels der die vier Zitzen nacheinander zu behandeln sind.

12. Vorrichtung nach Anspruch 11,
**dadurch gekennzeichnet, daß** die Behandlungsvorrichtung einen Zitzenbecher (108) umfaßt.

13. Vorrichtung nach Anspruch 12,
**dadurch gekennzeichnet, daß** der Zitzenbecher (108) an seinem oberen Ende mit einem elastischen Flansch (109) versehen ist, der im Betrieb zumindest teilweise mit der Zitze und auch mit einem Teil der Unterseite des Euters in Kontakt steht.

14. Vorrichtung nach Anspruch 13,
**dadurch gekennzeichnet, daß** der elastische Flansch (109) radial angeordnete Kanäle (120) aufweist.

15. Vorrichtung nach Anspruch 14,
**dadurch gekennzeichnet, daß** die Kanäle (120) eine Vorrichtung zur Übertragung von Ultrakurzwellen zur Anregung der Durchblutung aufweisen.

16. Vorrichtung nach einem der vorhergehenden Ansprüche,
**dadurch gekennzeichnet, daß** die Vorrichtung eine separate Vormelkvorrichtung (107) aufweist, die derart arbeitet, daß die mittels der Vormelkvorrichtung gewonnene Milch nicht mit Milch in Kontakt kommt, die für den menschlichen Verzehr gewonnen wird.

## Revendications

1. Installation pour traire automatiquement des animaux, tels que des vaches, à l'aide d'un box de traite (1) et d'un robot de traite (11) ayant des gobelets trayeurs (35) agencés dans celui-ci, l'installation comportant en outre un bras de robot (34, 104) ayant un dispositif de traite de premier lait (107) qui est agencé dans ledit box de traite (1), lequel dispositif de traite de premier lait (107) comporte un gobelet trayeur (108) et ledit dispositif de traite de premier lait (107) fonctionnant de telle façon que le lait obtenu au moyen du dispositif de traite de premier lait ne vienne pas en contact avec le lait obtenu pour la consommation humainen, **caractérisé par le fait qu'**un fluide de nettoyage et/ou de désinfection est fourni par la même conduite du dispositif de traite de premier lait que celle par laquelle le lait, en particulier, le premier lait est soutiré pendant la traite de premier lait.

2. Installation selon la revendication 1, **caractérisée en ce que** le dispositif de traite de premier lait peut être utilisé en tant que dispositif de massage (12, 107), le dispositif de massage (12, 107) étant de plus disposé sur le bras de robot (34, 104).

3. Installation selon l'une quelconque des revendications précédentes, **caractérisée en ce que** le bras de robot est constitué d'une première partie (105) et d'une seconde partie (106), de sorte que le dispositif de traite de premier lait (12, 107) est monté sur la seconde partie (106).

4. Installation selon la revendication 3, **caractérisée en ce que** la seconde partie (106) du bras de robot est constituée par une transmission à parallélogramme/biellettes (123).

5. Installation selon la revendication 4, **caractérisée en ce que** sur un premier bras (124) de la transmission à parallélogramme/biellettes (123) est monté un moteur (130) qui entraîne un excentrique (129) qui est agencé de manière pivotante dans un élément de liaison (131), dont l'autre extrémité est reliée de manière pivotante à un second bras (125) de la transmission à parallélogramme/biellettes (123).

6. Installation selon l'une quelconque des revendications 3 à 5, **caractérisée en ce que** la première partie (105) ainsi que la seconde partie (106) du bras de robot (104) sont réalisées sous la forme d'une transmission à parallélogramme/biellettes.

7. Installation selon la revendication 3, **caractérisée en ce que** sur la remière partie du bras de robot est monté un moteur (73) qui entraîne un excentrique (69) qui est agencé de manière pivotante dans un élément de liaison (70), dont l'autre extrémité est reliée de manière pivotante à la seconde partie du bras de robot (34).

8. Installation selon l'une quelconque des revendications précédentes, **caractérisée en ce que** le dispositif de massage (107) comporte un gobelet trayeur (108).

9. Installation selon l'une quelconque des revendications précédentes, **caractérisée en ce que** le dispositif de massage (76) comporte des moyens à l'aide desquels un fluide de nettoyage et/ou de désinfection peut être alimenté vers le dispositif de massage (12).

10. Installation selon la revendication 9, **caractérisée en ce que** les moyens comportent une ligne d'alimentation (90) reliée au côté inférieur du dispositif de massage.

11. Installation selon l'une quelconque des revendications précédentes, **caractérisée en ce qu'**elle comporte un seul dispositif de manipulation, par l'intermédiaire duquel les quatre trayons peuvent être traités successivement.

12. Installation selon la revendication 11, **caractérisée en ce que** l'installation de manipulation comporte un gobelet trayeur (108).

13. Installation selon la revendication 12, **caractérisée en ce que**, sur son extrémité supérieure, le gobelet trayeur (108) est muni d'un rebord souple (109) qui, en fonctionnement, est au moins partiellement en contact avec le trayon et aussi avec une partie du côté inférieur du pis.

14. Installation selon la revendication 13, **caractérisée en ce que** le rebord souple 109 est muni de canaux (120) disposés radialement.

15. Installation selon la revendication 14, **caractérisée en ce que** les canaux (120) constituent un agencement pour la transmission d'ondes ultracourtes destinées à stimuler l'écoulement sanguin.

16. Installation selon l'une quelconque des revendications précédentes, **caractérisée en ce qu'**elle comporte un dispositif séparé de traite de premier lait (107), qui agit de telle sorte que le lait obtenu par l'intermédiaire du dispositif de traite de premier lait ne vienne pas en contact avec le lait obtenu pour la consommation humaine.
